# EUROPÄISCHE PATENTSCHRIFT

(11) **EP 3 762 687 B1**
(45) Veröffentlichungstag und Bekanntmachung des Hinweises auf die Patenterteilung: **27.04.2022**
(21) Anmeldenummer: 19705513.0
(22) Anmeldetag: 15.02.2019
(51) Int. Cl.: G01F 1/684, G01F 1/69

(54) **THERMISCHES DURCHFLUSSMESSGERÄT**
THERMAL FLOWMETER
DÉBITMÈTRE THERMIQUE

(30) Priorität: 06.03.2018 DE 102018105046
(43) Veröffentlichungstag der Anmeldung: 13.01.2021
(73) Patentinhaber: Endress+Hauser Flowtec AG, 4153 Reinach (CH)
(72) Erfinder: GRÜN, Alexander, 79539 Lörrach (DE); SCHULTHEIS, Hanno, 3274 Hermrigen (CH); KAMBER, Sascha, 4458 Epfingen (CH)
(74) Vertreter: Andres, Angelika Maria
(86) Internationale Anmeldenummer: PCT/EP2019/053831
(87) Internationale Veröffentlichungsnummer: WO 2019/170397

(56) Entgegenhaltungen:
- DE-A1-102007 023 840
- DE-A1-102014 114 848
- DE-A1-102014 114 940
- DE-A1-102015 118 123
- DE-B3-102016 121 111
- US-B1- 6 227 045

## Beschreibung

Diese Erfindung betrifft ein thermisches Durchflussmessgerät und ein Verfahren zum Betreiben eines thermischen Durchflussmessgeräts.

Die thermische Durchflussmessung basiert darauf, dass über einen Energieeintrag über eine Sonde in ein an der Sonde vorbeiströmenden Medium oder über die Temperatur einer im Medium befindlichen beheizten Sonde Rückschlüsse auf den Massestrom des Mediums gezogen werden können. Allerdings lässt sich aus dem Energieeintrag bzw. aus der Temperatur der Sonde nicht ableiten, in welche Richtung das Medium strömt.

Die Schriften DE102015118123A1 und DE102014114940A1 zeigen einen Sensor eines thermischen Durchflussmessgeräts, welches in ein Messrohr des Durchflussmessgeräts getaucht wird und mehrere Sonden aufweisen, die entweder zum Beheizen des Mediums und zur Messung der eigenen Temperatur oder zum Messen der Temperatur des Mediums eingerichtet sind. Des Weiteren ist ein Strömungswiderstand dazu eingerichtet, eine richtungsabhängige Anströmung einer beheizbaren Sonde zu bewirken, um aus der Richtungsabhängigkeit der Anströmung eine eindeutige Richtungsangabe der Strömung des Mediums im Messrohr herleiten zu können. Jedoch hat sich gezeigt, dass bei geringen bis mittleren Strömungsgeschwindigkeiten eine Strömungsrichtungsangabe mit hohen Unsicherheiten behaftet ist.

Aufgabe der Erfindung ist es daher, ein Durchflussmessgerät vorzuschlagen, mittels welchem eine zuverlässige Strömungsrichtungserkennung des Mediums im Messrohr ermöglicht wird.

Die Aufgabe wird gelöst durch ein thermisches Durchflussmessgerät gemäß dem unabhängigen Anspruch 1.

Ein erfindungsgemäßes thermisches Durchflussmessgerät zur Messung des Massedurchflusses eines Mediums in einem Messrohr umfasst:
ein Messrohr mit einer Messrohrwand und einer Messrohrachse;
einen Sensor mit vier Sonden, welche Sonden ausgehend von einem Sensorgrundkörper in das Messrohr hineinragen, wobei die Sonden dazu eingerichtet sind, das Medium zu heizen, dessen Temperatur zu bestimmen oder eine Strömung des Mediums im Messrohr zu beeinflussen;
eine elektronische Mess-/Betriebsschaltung, welche dazu eingerichtet ist, zumindest drei Sonden zu betreiben und mittels deren Betrieb Durchflussmesswerte zu erstellen und bereitzustellen,
wobei jede Sonde einen Sondengrundkörper und einen Sondenwirkkörper aufweist,
wobei der Sondengrundkörper jeweils auf einer dem Sensorgrundkörper zugewandten Seite der entsprechenden Sonde angeordnet ist, und wobei der Wirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen,
wobei die Sondengrundkörper säulenförmig ausgestaltet sind,
wobei die Sondengrundkörper auf einer Oberfläche des Sensorgrundkörpers eine Raute aufspannen, wobei die Raute durch Flächenschwerpunkte von Querschnitten der Sondengrundkörper definiert ist.

Durch diese Sondenanordnung erreicht man eine hohe Symmetrie der Anordnung bzgl. Strömungswiderstände des Sensors hinsichtlich beider möglichen Strömungsrichtungen des Mediums im Messrohr.

In einer Ausgestaltung ist eine erste Diagonale der Raute parallel zur Messrohrachse, und wobei eine zweite Diagonale in einem Messrohrquerschnitt liegt.

Erfindungsgemäß ist eine erste Sonde dazu eingerichtet, die Temperatur des Mediums zu messen,
wobei eine zweite Sonde und eine dritte Sonde dazu eingerichtet sind, das Medium zu beheizen und jeweils die eigene Temperatur zu bestimmen,
wobei die erste Sonde auf einer ersten Seite der ersten Diagonalen angeordnet ist, und
wobei die dritte Sonde auf einer zweiten Seite der ersten Diagonalen angeordnet ist,
wobei die zweite und die vierte Sonde auf gegenüberliegenden Seiten der zweiten Diagonalen angeordnet sind,
wobei eine vierte Sonde dazu eingerichtet ist, eine Teilströmung des Mediums zwischen der ersten Sonde und der dritten Sonde zu behindern.

Der Wärmeübertrag der heizenden Sonden auf das Medium ist ausreichend gering, so dass die erste Sonde unabhängig von der Strömungsrichtung des Mediums in guter Näherung die Temperatur des Mediums unbeeinflusst durch den Wärmeübertrag erfasst. Ein erster Temperaturunterschied zwischen der ersten Sonde und der zweiten Sonde ist dazu geeignet, um für eine Messung der Strömungsgeschwindigkeit des Mediums herangezogen zu werden. Ein zweiter Temperaturunterschied zwischen der ersten Sonde und der dritten Sonde ist dazu geeignet um für eine Messung der Strömungsrichtung herangezogen zu werden. Beispielsweise kann bei gleicher Heizleistung der zweiten Sonde und der dritten Sonde im Falle eines im Vergleich zum ersten Temperaturunterschied größeren zweiten Temperaturunterschied darauf geschlossen werden, dass sich die dritte Sonde im Strömungsschatten befindet. Beispielsweise können aber auch ein zeitlicher Verlauf des ersten Temperaturunterschieds sowie des zweiten Temperaturunterschieds genutzt werden, um Durchflussmesswerten für beide Strömungsrichtungen zu erwartende Temperaturen zuzuordnen. In diesem Fall kann die Heizleistung der dritten Sonde verschieden zur Heizleistung der zweiten Sonde sein.

Erfindungsgemäß weist der Sondenwirkkörper der vierten Sonde entlang der ersten Diagonalen eine erste Breite und entlang der zweiten Diagonalen eine zweite Breite auf, wobei die zweite Breite um einen Faktor von mindestens 1.1 und insbesondere mindestens 1.2 und bevorzugt mindestens 1.3 größer ist als die erste Breite,
und wobei ein geometrischer Schwerpunkt des Sondenwirkkörpers der vierten Sonde in Richtung der zweiten Sonde versetzt ist.

Auf diese Art und Weise kann ein Wärmestrom von der dritten Sonde zur ersten Sonde zumindest teilweise unterbunden werden, was die Messung des Durchflusses verbessert.

In einer Ausgestaltung ist eine Außenfläche des Sondenwirkkörpers der vierten Sonde symmetrisch bezüglich der zweiten Diagonalen.

In einer Ausgestaltung umfassen die erste Sonde, die zweite Sonde und die dritte Sonde jeweils eine Sondenhülse,
wobei das Durchflussmessgerät Widerstandthermometer aufweist, wobei in durch die Sondenhülsen umfassten Innenräumen jeweils ein Widerstandthermometer angeordnet ist, welches Widerstandthermometer dazu eingerichtet ist, eine Temperatur zu erfassen oder Wärmeenergie abzugeben.

In einer Ausgestaltung ist die vierte Sonde massiv.

In einer Ausgestaltung ist ein zur ersten Sonde gehörender Innenwinkel der Raute kleiner als 90° und insbesondere kleiner als 75° und bevorzugt kleiner als 60°.

Dadurch ist ein verminderter Strömungswiderstand des Sensors im Messrohr sowie eine gute Anströmung der Sonden sichergestellt.

In einer Ausgestaltung weist ein Flächenschwerpunkt eines Querschnitts des Sondengrundkörpers der vierten Sonde zu einem Flächenschwerpunkt eines Querschnitts des Sondengrundkörpers der zweiten Sonde einen zweiten Abstand auf.
wobei ein Minimalabstand der Außenfläche des Sondenwirkkörpers der vierten Sonde zu einer Außenfläche des Sondenwirkkörpers der zweiten Sonde kleiner ist als 30% und insbesondere kleiner als 15% und bevorzugt kleiner als 5% des zweiten Abstands.

In einer Ausgestaltung ist ein erster Außendurchmesser der ersten Sonde, der zweiten Sonde sowie der dritten Sonde in den jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm.

In einer Ausgestaltung weist ein Flächenschwerpunkt eines Querschnitts des Sondengrundkörpers der ersten Sonde zu einem Flächenschwerpunkt eines Querschnitts des Sondengrundkörpers der dritten Sonde einen ersten Abstand auf,
wobei der erste Abstand mindestens zwei erste Außendurchmesser ist.

In einer Ausgestaltung weisen Querschnitte der ersten Sonde, der zweiten Sonde und sowie der dritten Sonde zumindest in Bereichen der Sondenwirkkörper einen runden Umriss auf.

Runde Umrisse haben eine erleichterte Fertigung und strömungsrichtungsunabhängige Strömungswiderstände zur Folge.

Im Folgenden wird die Erfindung anhand von schematischen Ausführungsbeispielen beschrieben.

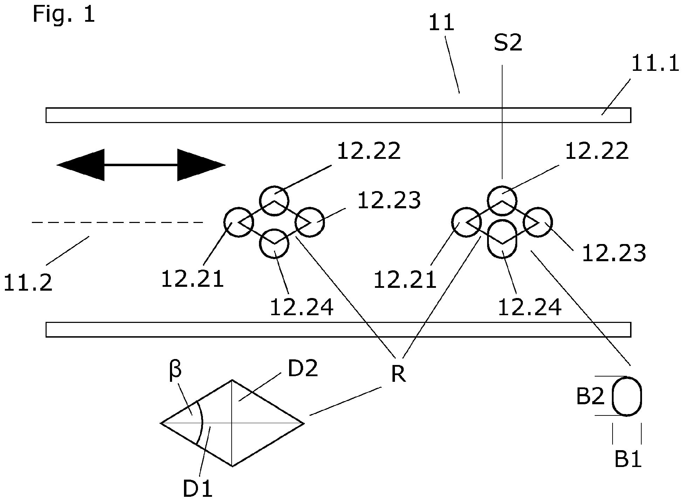

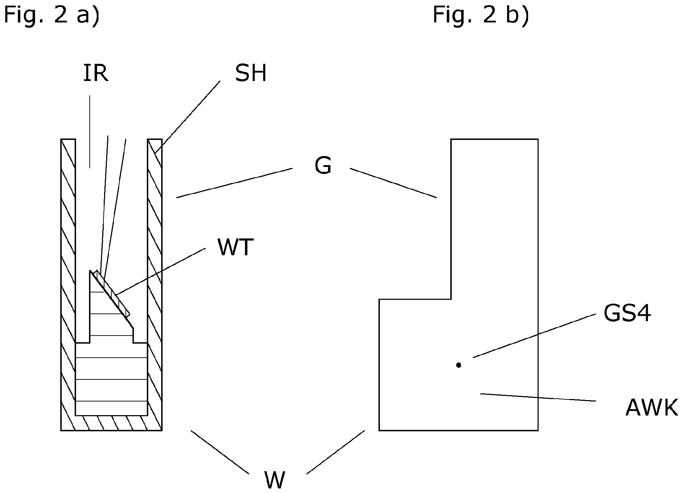

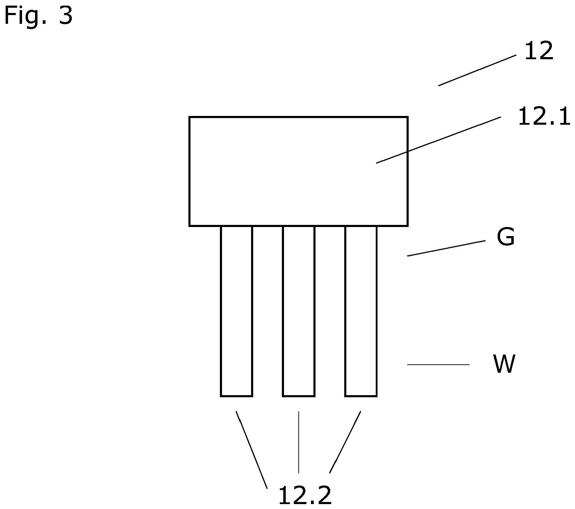

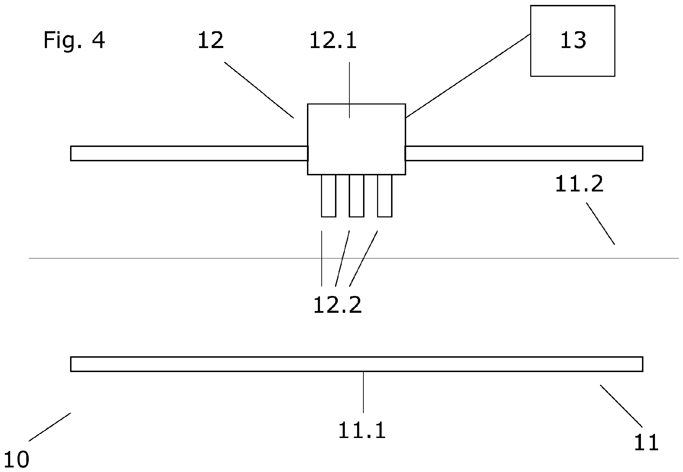

Fig. 1 zeigt Wirkbereiche zweier beispielhafter erfindungsgemäßer Sondenanordnungen eines thermischen Durchflussmessgerät und ihre Ausrichtungen in einem Messrohr; Fig. 2 a) zeigt einen Querschnitt durch eine beispielhafte erste, zweite oder dritte Sonde und Fig. 2 b) zeigt eine Seitenansicht einer beispielhaften vierten Sonde; und Fig. 3 zeigt eine Seitenansicht auf einen erfindungsgemäßen Sensor; und Fig. 4 skizziert einen Aufbau eines beispielhaften schematischen erfindungsgemäßen thermischen Durchflussmessgeräts.

Fig. 1 zeigt Wirkbereiche zweier erfindungsgemäßer Sondenanordnungen in einem Messrohr 11 mit einer Messrohrwand 11.1 mit jeweils einer ersten Sonde 12.21, einer zweiten Sonde 12.22, einer dritten Sonde 12.23 und einer vierten Sonde 12.24. Die Wirkbereiche sind die Bereiche, in denen Sondenwirkkörper W, (siehe Figs. 2 a), 2 b) und 3)) ihre Wirkung entfalten. Die Sondenwirkkörper schließen jeweils an einen Sondengrundkörper G der entsprechenden Sonde an, welche Sondengrundkörper an einen Sensorgrundkörper 12.1 angeschlossen sind (siehe Figs. 2 a), 2 b) und 3)). Die Wirkung der Sondenwirkkörper ist es, das Medium zu heizen, die Temperatur des Mediums zu bestimmen und/oder eine Strömung des Mediums im Messrohr zu beeinflussen.

Die Sondengrundkörper einer Sondenanordnung spannen eine Raute auf, wobei eine erste Diagonale D1 der Diagonale parallel zu einer Messrohrachse 11.2 ausgerichtet ist. In Fig. 1 ist die Ausrichtung der Messrohrachse skizziert. Eine zweite Diagonale D2 liegt in einem Querschnitt des Messrohrs. Dadurch wird eine hohe Symmetrie bzw. Unabhängigkeit des Strömungswiederstands des Sensors von der Strömungsrichtung des Mediums erreicht. Ein Innenwinkel β, welcher der ersten Sonde zugeordnet ist, ist dabei kleiner als 90 Grad, so dass die Sondenanordnung einen kleinen Strömungswiderstand aufweist.

Bei einer nicht erfindungsgemäßen Sondenanordnung weist die vierte Sonde 12.24 in ihrem Wirkbereich wie die anderen Sonden einen runden Umriss auf. Auf diese Weise kann ein Sensor mit den Sonden kosteneffizient gefertigt werden. Bei der erfindungsgemäßen Sondenanordnung weist die vierte Sonde 12.24 in ihrem Wirkbereich einen nichtrunden Umriss auf, wobei die Sonde parallel zur ersten Diagonalen D1 eine erste Breite B1 sowie parallel zur zweiten Diagonalen D2 eine zweite Breite B2 aufweist, wobei die zweite Breite mindestens 10% größer ist als die erste Breite. Ein geometrischer Schwerpunkt GS4 (siehe Fig. 2 b)) des Sondenwirkkörpers der vierten Sonde ist in Richtung der zweiten Sonde versetzt. Dadurch wird eine teilweise Sperrwirkung für eine Strömung eines Mediums durch das Messrohr in den Wirkbereichen der Sonden entlang der zweiten Diagonalen D2 erzielt. Dadurch kann ein Einfluss der das Medium beheizenden dritten Sonde 12.23 auf die erste Sonde vermindert und somit eine Messgenauigkeit des Sensors erhöht werden.

Ein Flächenschwerpunkt eines Querschnitts des Sondengrundkörpers der vierten Sonde weist dabei zu einem Flächenschwerpunkt eines Querschnitts des Sondengrundkörpers der zweiten Sonde einen zweiten Abstand auf. Ein Minimalabstand der Außenfläche des Sondenwirkkörpers der vierten Sonde AWK zu einer Außenfläche des Sondenwirkkörpers der zweiten Sonde kleiner ist als 30% und insbesondere kleiner als 15% und bevorzugt kleiner als 5% des zweiten Abstands.

Fig. 2 a) zeigt einen Längsschnitt durch eine beispielhafte erste, zweite oder dritte Sonde, wobei eine Sondenhülse SH einen Innenraum IR der Sonde definiert, in welchem Innenraum die Sonde ein Widerstandsthermometer WT aufweist. Das Widerstandsthermometer ist dabei über ein Kontaktmittel thermisch und mechanisch mit der Sondenhülse gekoppelt. Das Kontaktmittel kann beispielsweise ein während der Herstellung der Sonde aufgeschmolzenes und nach Erstarren anschließend bearbeitetes Schmelzgut sein.

Fig. 2 b) zeigt eine zu einem Messrohrquerschnitt senkrecht Aufsicht auf eine beispielhafte vierte Sonde, welche in ihrem Wirkbereich W verbreitert ist und somit eine vergrößerte Außenfläche AWK aufweist. Ein geometrischer Schwerpunkt GS4 des Sondenwirkkörpers der vierten Sonde ist dabei zu einer Längsachse des Grundkörpers versetzt.

Fig. 3 zeigt eine schematische Seitenansicht eines Sensors 12 eines thermischen Durchflussmessgeräts, welcher Sensor einen Sensorgrundkörper 12.1 und Sonden 12.2 aufweist, wobei die Sonden wie in Figs. 2 a) und b) beschrieben jeweils einen Sondengrundkörper G und einen Sondenwirkkörper W umfassen.

Fig. 4 skizziert einen schematischen Aufbau eines erfindungsgemäßen thermischen Durchflussmessgeräts 10 mit einem Messrohr 11 mit einer Messrohrwand 11.1 und einer Messrohrachse 11.2, einem Sensor 12 mit einem Sensorgrundkörper 12.1 und mit Sonden 12.2, und einer elektronischen Mess-/Betriebsschaltung 13 zum Betreiben des Sensors und Bereitstellen von Durchflussmesswerten. Der Sensorgrundkörper ist dabei in der Messrohrwand mediendicht angebracht. Die Wirkbereiche der Sonden sind dabei bevorzugt in einem Strömungsbereich des Mediums angeordnet, in welchem Strömungsbereich ein lokaler Massedurchfluss weniger als 10% und insbesondere weniger als 5% und bevorzugt weniger als 2% von einem über einen Strömungsquerschnitt gebildeten Mittelwert abweicht.

### Bezugszeichenliste

- 10: thermisches Durchflussmessgerät
- 11: Messrohr
- 11.1: Messrohrwand
- 11.2: Messrohrachse
- 12: Sensor
- 12.1: Sensorgrundkörper
- 12.2: Sonde
- 12.21: erste Sonde
- 12.22: zweite Sonde
- 12.23: dritte Sonde
- 12.24: vierte Sonde
- 13: elektronische Mess-/Betriebsschaltung
- G: Sondengrundkörper
- W: Sondenwirkkörper
- SH: Sondenhülse
- R: Raute
- AWK: Außenfläche Sondenwirkkörper
- D1: erste Diagonale
- D2: zweite Diagonale
- GS4: geometrischer Schwerpunkt des Sondenwirkkörpers der vierten Sonde
- WT: Widerstandsthermometer
- IR: Innenraum
- β: Innenwinkel
- B1: erste Breite
- B2: zweite Breite

## Patentansprüche

1. Thermisches Durchflussmessgerät (10) zur Messung des Massedurchflusses eines Mediums in einem Messrohr umfassend:
ein Messrohr (11) mit einer Messrohrwand (11.1) und einer Messrohrachse (11.2);
einen Sensor (12) mit vier Sonden (12.2), welche Sonden ausgehend von einem Sensorgrundkörper (12.1) in das Messrohr hineinragen, wobei die Sonden dazu eingerichtet sind, das Medium zu heizen, dessen Temperatur zu bestimmen oder
eine Strömung des Mediums im Messrohr zu beeinflussen;
eine elektronische Mess-/Betriebsschaltung (13), welche dazu eingerichtet ist,
zumindest drei Sonden zu betreiben und mittels deren Betrieb Durchflussmesswerte zu erstellen und bereitzustellen,
wobei jede Sonde einen Sondengrundkörper (G) und einen Sondenwirkkörper (W) aufweist, wobei der Sondengrundkörper jeweils auf einer dem Sensorgrundkörper zugewandten Seite der entsprechenden Sonde angeordnet ist, und wobei der Sondenwirkkörper jeweils auf einer dem Sensorgrundkörper abgewandten Seite der entsprechenden Sonde angeordnet ist,
wobei der Sondenwirkkörper dazu eingerichtet ist, das Medium zu heizen, die Temperatur des Mediums zu bestimmen und/oder eine Strömung des Mediums im Messrohr zu beeinflussen,
wobei die Sondengrundkörper säulenförmig ausgestaltet sind,
wobei die Sondengrundkörper auf einer Oberfläche des Sensorgrundkörpers eine Raute (R) aufspannen, wobei die Raute durch Flächenschwerpunkte von Querschnitten der Sondengrundkörper definiert ist, wobei
eine erste Sonde (12.21) dazu eingerichtet ist, die Temperatur des Mediums zu messen,
wobei eine zweite Sonde (12.22) und eine dritte Sonde (12.23) dazu eingerichtet sind, das Medium zu beheizen und jeweils die eigene Temperatur zu bestimmen, wobei die erste Sonde auf einer ersten Seite der ersten Diagonalen angeordnet ist,
und wobei die dritte Sonde auf einer zweiten Seite der ersten Diagonalen angeordnet ist, wobei die zweite und eine vierte Sonde (12.24) auf gegenüberliegenden Seiten der zweiten Diagonalen angeordnet sind,
wobei die vierte Sonde dazu eingerichtet ist, eine Teilströmung des Mediums zwischen der ersten Sonde und der dritten Sonde zu behindern,
**dadurch gekennzeichnet, dass** der Sondenwirkkörper (W) der vierten Sonde (12.24) parallel zur ersten Diagonalen (D1) eine erste Breite (B1) und parallel zur zweiten Diagonalen (D2) eine zweite Breite (B2) aufweist, wobei die zweite Breite um einen Faktor von mindestens 1.1 und insbesondere mindestens 1.2 und bevorzugt mindestens 1.3 größer ist als die erste Breite,
und wobei ein geometrischer Schwerpunkt (GS4) des Sondenwirkkörpers der vierten Sonde in Richtung der zweiten Sonde versetzt ist.

2. Durchflussmessgerät nach Anspruch 1,
wobei die erste Diagonale (D1) der Raute parallel zur Messrohrachse (11.2) ist,
und wobei die zweite Diagonale (D2) in einem Messrohrquerschnitt liegt.

3. Durchflussmessgerät nach Anspruch 1 oder 2,
wobei eine Außenfläche (AWK) des Sondenwirkkörpers der vierten Sonde symmetrisch bezüglich der zweiten Diagonalen ist.

4. Durchflussmessgerät nach einem der Ansprüche 2 oder 3,
wobei die erste Sonde, die zweite Sonde und die dritte Sonde jeweils eine Sondenhülse (SH) umfassen,
wobei das Durchflussmessgerät Widerstandthermometer (WT) aufweist, wobei in durch die Sondenhülsen umfassten Innenräumen (IR) der ersten, zweiten und dritten Sonde jeweils mindestens ein Widerstandthermometer angeordnet ist, welches Widerstandthermometer dazu eingerichtet ist, eine Temperatur zu erfassen oder Wärmeenergie abzugeben.

5. Durchflussmessgerät nach einem der vorigen Ansprüche,
wobei die vierte Sonde massiv ist.

6. Durchflussmessgerät nach einem der vorigen Ansprüche,
wobei ein zur ersten Sonde gehörender Innenwinkel β der Raute kleiner als 90° und insbesondere kleiner als 75° und bevorzugt kleiner als 60° ist.

7. Durchflussmessgerät nach einem der Ansprüche 2 bis 6,
wobei ein Flächenschwerpunkt eines Querschnitts des Sondengrundkörpers der vierten Sonde zu einem Flächenschwerpunkt eines Querschnitts des Sondengrundkörpers der zweiten Sonde einen zweiten Abstand aufweist.
wobei ein Minimalabstand der Außenfläche des Sondenwirkkörpers der vierten Sonde zu einer Außenfläche des Sondenwirkkörpers der zweiten Sonde kleiner ist als 30% und insbesondere kleiner als 15% und bevorzugt kleiner als 5% des zweiten Abstands.

8. Durchflussmessgerät nach einem der vorigen Ansprüche,
wobei ein erster Außendurchmesser der ersten Sonde, der zweiten Sonde sowie der dritten Sonde in den jeweiligen Wirkbereichen mindestens 1 mm und insbesondere 1.5 mm und bevorzugt mindestens 2 mm und/oder höchsten 7 mm und insbesondere höchstens 5 mm und bevorzugt höchstens 4 mm ist.

9. Durchflussmessgerät nach einem der Ansprüche 2 bis 8,
wobei ein Flächenschwerpunkt eines Querschnitts des Sondengrundkörpers der ersten Sonde zu einem Flächenschwerpunkt eines Querschnitts des Sondengrundkörpers der dritten Sonde einen ersten Abstand aufweist,
wobei der erste Abstand mindestens zwei erste Außendurchmesser ist.

10. Durchflussmessgerät nach einem der vorigen Ansprüche,
wobei Querschnitte der ersten Sonde, der zweiten Sonde und sowie der dritten Sonde zumindest in Bereichen der Sondenwirkkörper einen runden Umriss aufweisen.

## Claims

1. Thermal flowmeter (10) designed to measure the mass flow of a medium in a measuring tube, said flowmeter comprising:
a measuring tube (11) with a measuring tube wall (11.1) and a measuring tube axis (11.2);
a sensor (12) with four probes (12.2), which extend into the measuring tube from a sensor base body (12.1), wherein the probes are designed to heat the medium, determine its temperature or influence a flow of the medium through the measuring tube;
an electronic measuring/operating circuit (13), wherein said circuit is designed to operate at least three probes and to create and provide flow measured values via their operation,
wherein each probe has a probe base body (G) and a probe active body (W), wherein the probe base body is arranged, in each case, on a side of the corresponding probe facing towards the sensor base body, and wherein the probe active body is arranged in each case on a side of the corresponding probe facing away from the sensor base body,
wherein the probe active body is designed to heat the medium, determine the temperature of the medium and/or influence a flow of the medium in the measuring tube,
wherein the probe base bodies are designed in the form of a column,
wherein the probe base bodies form a rhombus (R) on a surface of the sensor base body, wherein the rhombus is defined by area centroids of cross-sections of the probe base body,
wherein a first probe (12.21) is designed to measure the temperature of the medium,
wherein a second probe (12.22) and a third probe (12.23) are each designed to heat the medium and determine the temperature,
wherein the first probe is arranged on a first side of the first diagonal, and the third probe is arranged on a second side of the first diagonal, wherein the second and a fourth probe (12.24) are arranged on opposite sides of the second diagonal, wherein the fourth probe is designed to prevent a partial flow of the medium between the first probe and the third probe,
**characterized in that**
the probe active body (W) of the fourth probe (12.24) has a first width (B1) parallel to the first diagonal (D1) and a second width (B2) parallel to the second diagonal (D2), wherein the second width is greater than the first width by a factor of at least 1.1 and particularly of at least 1.2 and preferably of at least 1.3,
and wherein a geometric center (GS4) of the probe active body of the fourth probe is offset in the direction of the second probe.

2. Flowmeter as claimed in Claim 1,
wherein the first diagonal (D1) of the rhombus is parallel to the measuring tube axis (11.2),
and wherein the second diagonal (D2) is situated in a cross-section of the measuring tube.

3. Flowmeter as claimed in Claim 1 or 2,
wherein an outer surface (AWK) of the active body of the fourth probe is symmetrical in relation to the second diagonal.

4. Flowmeter as claimed in one of the Claims 2 or 3,
wherein the first probe, the second probe and the third probe each comprise a probe sleeve (SH),
wherein the flowmeter has resistance thermometers (WT), wherein at least one resistance thermometer is arranged in the interior spaces (IR), surrounded by the probe sleeves, of the first, the second and the third probe, wherein the resistance thermometer is designed to measure a temperature or to emit thermal energy.

5. Flowmeter as claimed in one of the previous claims,
wherein the fourth probe is solid.

6. Flowmeter as claimed in one of the previous claims,
wherein an interior angle β of the rhombus pertaining to the first probe is less than 90° and particularly less than 75° and preferably less than 60°.

7. Flowmeter as claimed in one of the Claims 2 to 6,
wherein an area centroid of a cross-section of the probe base body of the fourth probe has a second distance in relation to an area centroid of a cross-section of the probe base body of the second probe,
wherein a minimum distance of the outer surface of the probe active body of the fourth probe to an outer surface of the probe active body of the second probe is less than 30 % and particularly less than 15 % and preferably less than 5 % of the second distance.

8. Flowmeter as claimed in one of the previous claims,
wherein a first outer diameter of the first probe, of the second probe and of the third probe in the individual active areas is at least 1 mm and particularly at least 1.5 mm and preferably at least 2 mm and/or at maximum 7 mm and particularly at maximum 5 mm and preferably at maximum 4 mm.

9. Flowmeter as claimed in one of the Claims 2 to 8,
wherein an area centroid of a cross-section of the probe base body of the first probe has a first distance in relation to an area centroid of a cross-section of the probe base body of the third probe,
wherein the first distance is at least equal to two first outer diameters.

10. Flowmeter as claimed in one of the previous claims,
wherein cross-sections of the first probe, of the second probe and of the third probe have a round contour at least in areas of the probe active bodies.

## Revendications

1. Débitmètre thermique (10) destiné à la mesure du débit massique d'un produit dans un tube de mesure, lequel débitmètre comprend :
un tube de mesure (11) avec une paroi de tube de mesure (11.1) et un axe de tube de mesure (11.2) ;
un capteur (12) avec quatre sondes (12.2), lesquelles sondes s'étendent dans le tube de mesure à partir d'un corps de base de capteur (12.1), les sondes étant conçues pour chauffer le produit, déterminer sa température ou influencer un écoulement du produit dans le tube de mesure ;
un circuit électronique de mesure/d'exploitation (13), lequel circuit est conçu pour faire fonctionner au moins trois sondes et pour établir et mettre à disposition des valeurs mesurées de débit au moyen de leur fonctionnement,
chaque sonde présentant un corps de base de sonde (G) et un corps actif de sonde (W), le corps de base de sonde étant disposé respectivement sur un côté de la sonde correspondante tourné vers le corps de base de capteur, et le corps actif de sonde étant disposé respectivement sur un côté de la sonde correspondante opposé au corps de base de capteur,
le corps actif de sonde étant conçu pour chauffer le produit, déterminer la température du produit et/ou influencer un écoulement du produit dans le tube de mesure,
les corps de base de sonde étant réalisés en forme de colonne,
les corps de base de sonde formant un losange (R) sur une surface du corps de base de capteur, le losange étant défini par des centres de gravité de surface de sections transversales des corps de base de sonde,
une première sonde (12.21) étant conçue pour mesurer la température du produit, une deuxième sonde (12.22) et une troisième sonde (12.23) étant conçues pour chauffer le produit et déterminer chacune leur propre température,
la première sonde étant disposée sur un premier côté de la première diagonale, et la troisième sonde étant disposée sur un deuxième côté de la première diagonale, la deuxième et une quatrième sonde (12.24) étant disposées sur des côtés opposés de la deuxième diagonale,
la quatrième sonde étant conçue pour empêcher un écoulement partiel du produit entre la première sonde et la troisième sonde,
**caractérisé**
**en ce que** le corps actif de sonde (W) de la quatrième sonde (12.24) présente parallèlement à la première diagonale (D1) une première largeur (B1) et parallèlement à la deuxième diagonale (D2) une deuxième largeur (B2), la deuxième largeur étant supérieure à la première largeur d'un facteur d'au moins 1.1 et notamment d'au moins 1.2 et de préférence d'au moins 1.3,
et un centre de gravité géométrique (GS4) du corps actif de la quatrième sonde étant décalé en direction de la deuxième sonde.

2. Débitmètre selon la revendication 1,
pour lequel la première diagonale (D1) du losange est parallèle à l'axe de tube de mesure (11.2),
et pour lequel la deuxième diagonale (D2) est située dans une section transversale du tube de mesure.

3. Débitmètre selon la revendication 1 ou 2,
pour lequel une surface extérieure (AWK) du corps actif de la quatrième sonde est symétrique par rapport à la deuxième diagonale.

4. Débitmètre selon l'une des revendications 2 ou 3,
pour lequel la première sonde, la deuxième sonde et la troisième sonde comprennent chacune un manchon de sonde (SH),
pour lequel le débitmètre présente des thermorésistances (WT), au moins une thermorésistance étant disposée dans des espaces intérieurs (IR), entourés par les manchons de sonde, de la première, de la deuxième et de la troisième sonde, laquelle thermorésistance est conçue pour mesurer une température ou émettre de l'énergie thermique.

5. Débitmètre selon l'une des revendications précédentes,
pour lequel la quatrième sonde est massive.

6. Débitmètre selon l'une des revendications précédentes,
pour lequel un angle intérieur β du losange appartenant à la première sonde est inférieur à 90° et notamment inférieur à 75° et de préférence inférieur à 60°.

7. Débitmètre selon l'une des revendications 2 à 6,
pour lequel un centre de gravité de surface d'une section transversale du corps de base de la quatrième sonde présente une deuxième distance par rapport à un centre de gravité de surface d'une section transversale du corps de base de la deuxième sonde,
pour lequel une distance minimale de la surface extérieure du corps actif de la quatrième sonde à une surface extérieure du corps actif de la deuxième sonde est inférieure à 30 % et notamment inférieure à 15 % et de préférence inférieure à 5 % de la deuxième distance.

8. Débitmètre selon l'une des revendications précédentes,
pour lequel un premier diamètre extérieur de la première sonde, de la deuxième sonde ainsi que de la troisième sonde dans les zones actives respectives est d'au moins 1 mm et notamment de 1,5 mm et de préférence d'au moins 2 mm et/ou d'au plus 7 mm et notamment d'au plus 5 mm et de préférence d'au plus 4 mm.

9. Débitmètre selon l'une des revendications 2 à 8,
pour lequel un centre de gravité de surface d'une section transversale du corps de base de la première sonde présente une première distance par rapport à un centre de gravité de surface d'une section transversale du corps de base de la troisième sonde,
la première distance étant égale à au moins deux premiers diamètres extérieurs.

10. Débitmètre selon l'une des revendications précédentes,
pour lequel les sections transversales de la première sonde, de la deuxième sonde et de la troisième sonde présentent un contour rond au moins dans les zones des corps actifs de la sonde.
